(19) Europäisches Patentamt

European Patent Office

Office européen des brevets

(11) **EP 1 693 558 A1**

(12) **EUROPÄISCHE PATENTANMELDUNG**

(43) Veröffentlichungstag:
**23.08.2006 Patentblatt 2006/34**

(51) Int Cl.:
***F02C 9/00*** *(2006.01)*

(21) Anmeldenummer: **05405194.1**

(22) Anmeldetag: **16.02.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(71) Anmelder: **ABB Technology AG
8050 Zürich (CH)**

(72) Erfinder:
• **Weisenstein, Wolfgang
5507 Mellingen (CH)**

• **Korba, Petr
5415 Nussbaumen (CH)**

(74) Vertreter: **ABB Patent Attorneys
c/o ABB Schweiz AG,
Intellectual Property (CH-LC/IP),
Brown Boveri Strasse 6
5400 Baden (CH)**

(54) **Verfahren zur Schadstoffemissionsvorhersage von Verbrennungsprozessen**

(57) Es wird ein Verfahren zur Herleitung einer mathematischen Beziehung ($\underline{c}(K)$) zwischen Betriebsparametern ($\underline{x}$) einer Anlage zur Verbrennung fossiler Brennstoffe, und einem Emissionswert ($r(K)$) eines beim Betrieb der Anlage ausgestossenen Schadstoffes ($K$) vorgestellt. Die Beziehung wird aus aufgezeichneten historischen Messdaten der Betriebsparameter ($E$) und zugehöriger Emissionswerte ($r_{past}(K)$) des Schadstoffes hergeleitet. Die Komplexität wird durch einen Ansatz mit niedriggradigen Polynomen in den Betriebsparametern verringert. Falls ein erster Datensatz ($E^1, r^1_{past}(K)$) keine ausreichende Reproduzierbarkeit erlaubt, wird die Herleitung mit einem zweiten Datensatz ($E^2, r^2_{past}(K)$) wiederholt. Eine Verwendung der hergeleiteten Beziehung erlaubt die Vorhersage von Schadstoffemissionswerten für einen bestimmten Zeitraum in der Zukunft.

Fig. 2

**Beschreibung**

TECHNISCHES GEBIET

Die vorliegende Erfindung bezieht sich auf den Betrieb von Anlagen zur Verbrennung fossiler Brennstoffe, insbesondere Gasturbinen. Sie betrifft ein Verfahren zur Herleitung einer analytischen Beziehung zwischen Betriebsparametern und Schadstoffemissionswerten der Anlage.

STAND DER TECHNIK

Die Schadstoffemissionen von technischen Verbrennungsprozessen sind häufig gesetzlichen Bestimmungen unterworfen, welche eine unzulässige Belastung der Umwelt durch hohe Schadstoffkonzentrationen in der Atmosphäre vermeiden sollen. Diese Bestimmungen beinhalten, dass der Schadstoffausstoss durch geeignete Messgeräte kontinuierlich überwacht wird und bei Überschreitung der jeweiligen Grenzwerte der Betreiber der Anlage mit einer Busse belegt wird. Für den Betreiber einer technischen Verbrennungsanlage, beispielsweise eines mit fossilen Brennstoffen betriebenen Kraftwerks, ist es somit für einen wirtschaftlichen Betrieb seiner Anlage wichtig, zu jedem Zeitpunkt über die aktuellen Emissionen informiert zu sein. Zusätzlich ist es von Vorteil, bei der Planung von Betriebsvorgängen über eine Vorhersage zu verfügen, welche die zu erwartenden Schadstoffemissionen in Abhängigkeit von Betriebsparametern wie einem Zustand der Anlage oder lokalen Umweltbedingungen möglichst genau einschätzen kann.

Um die Einhaltung der gesetzlichen Bestimmungen nachzuweisen ist heute jede technische Verbrennungsanlage, die solchen Bestimmungen unterliegt, mit einem Gasanalyse-System ausgestattet, das alle wichtigen Emissionsdaten zuverlässig und jeder Zeit zur Verfügung stellt. Diese Daten werden in einer Prozess-Datenbank gespeichert, um gegebenenfalls die Erfüllung der Bestimmungen auch in der Vergangenheit nachweisen zu können. Aus einer Analyse der Trends der verschiedenen Kennzahlen können zudem Informationen über den Abnutzungsverlauf der Anlage erhalten werden. Solche Gasanalyse-Systeme sind jedoch sehr teuer und bedürfen einer ständigen Wartung und Kontrolle. Ausserdem benötigen sie Betriebsmittel wie Kalibriergas, Nullgas oder hochreinen Wasserstoff, die ständig bevorratet werden müssen. In der besagten Prozess-Datenbank, oder einer anderen Datenbank für Prozessdaten der spezifischen Anlage, werden gleichzeitig die fortlaufend gemessenen Werte der verschiedensten Betriebsparameter wie Abgastemperatur, zugeführte Brennstoffmenge, Brennstoffzusammensetzung, abgegebene elektrische Leistung, Umgebungsparameter (Temperatur, Luftfeuchtigkeit, Luftdruck), Dampfparameter (Menge, Druck, Temperatur) aufgezeichnet.

Für eine Vorhersage der Schadstoffemissionen werden beim heutigen Stand der Technik mathematische Modelle der Gesamtanlage basierend auf den Auslegungs- und Konstruktionsdaten, wie beispielsweise Geometrien und Materialien von Turbinenschaufeln und anderen Anlagebauteilen, entwickelt. Diese Modelle beschreiben das Zusammenspiel aller Komponenten und ermöglichen eine Abschätzung der zu erwartenden Emissionswerte. Nachteil dieses Verfahrens ist, dass das Modell an jede Anlage individuell angepasst werden muss, was bei auch nur geringen Abweichungen von Anlagenstandards eine praktisch vollständige Neuentwicklung bedingt. In der Patentanmeldung DE-A 101 42 514 ist ein derartiger Stickoxid-"Prädiktor" erwähnt, ein Stickoxid-Konzentrationswertsignal auf der Basis von Betriebsparametern wie Druck, Temperatur, Strömungsgeschwindigkeit, Feuchtigkeit, Drehzahl usw. bestimmt. Dieser Wert wird anschliessend mit einem realen Wert verglichen, um einen Flammenrückschlag in der Magerbrennstoff-Vormischzone zu identifizieren.

DARSTELLUNG DER ERFINDUNG

Aufgabe der vorliegenden Erfindung ist es, eine Alternative zu den bekannten modellbasierten Verfahren zur Abschätzung von Schadstoffemissionen von Gasturbinen zu schaffen. Diese Aufgabe wird gelöst durch ein Verfahren zur Herleitung einer analytischen Beziehung zwischen Betriebsparametern und Emissionswerten einer Anlage zur Verbrennung fossiler Brennstoffe, sowie eine Verwendung dieser Beziehung zur Vorhersage einer Schadstoffkonzentration mit den Merkmalen der Patentansprüche 1 und 8. Weitere vorteilhafte Ausführungsformen gehen aus den abhängigen Patentansprüchen hervor.

Kern der Erfindung ist es, im Betrieb einer Anlage zur Verbrennung fossiler Brennstoffe gesammelte Erfahrungen zu verwerten und daraus eine analytische Beziehung, d.h. eine numerisch unmittelbar auswertbare Relation, zwischen Betriebsparametern und Schadstoffemissionen herzuleiten. Schadstoffemissionsdaten und Betriebsdaten von allen für die Verbrennung relevanten Betriebsparametern, wie beispielsweise Abgastemperatur, Brennstoffmenge, Umgebungsparameter und produzierter Leistung der Anlage, werden laufend gemessen und in einer Datenbank der Anlage gespeichert, und stehen somit für eine erfindungsgemässe Verwertung ohne weiteres Dazutun zur Verfügung. Da die hergeleitete Beziehung bei Bedarf jederzeit und insbesondere in beliebig kurzen Zeitabständen aktualisierbar ist, stellt sie ein zuverlässiges Mittel zur Vorhersage von Schadstoffemissionen der Anlage dar.

Gemäss bevorzugten Ausführungsformen der Erfindung werden aus den historischen Messdaten die Koeffizienten einer linearen Beziehung hergeleitet, in welcher jede interessierende Schadstoffkonzentration eine Summe von Polynomen höchstens dritten Grades in jeweils einem ausgewählten Betriebsparameter ist. Dadurch sind alle für die Verbrennung relevanten Betriebsparameter in einer übersichtlichen Gleichung zusammengefasst. Durch eine Verwendung von Gradienten gemessener Parameterwerte als zusätzliche Betriebsparameter können auch transiente Vorgänge im Anlagenbetrieb erfasst werden.

In weiteren Ausführungsformen wird eine Beziehung auf Grund von ersten Messwerten, welche beispielsweise in einem ersten Zeitraum der Vergangenheit liegen, hergeleitet. Mit den aktuellen Betriebsparameterwerten wird sodann diese Beziehung ausgewertet, und die berechnete Schadstoffkonzentration mit einem gemessenen aktuellen Schadstoffwert verglichen. Übersteigt die Differenz dabei einen bestimmten Toleranzwert, wird ein neuer Satz Messwerte aus einem zweiten Zeitraum ausgewählt und verwertet. Dieses Vorgehen wird wiederholt, bis die Differenz den Toleranzwert unterschreitet.

In einer bevorzugten Verwendung der erfindungsgemäss ermittelten Beziehung werden zukünftige Betriebsparameterwerte vorgegeben oder abgeschätzt, und daraus Vorhersagen über zukünftige Schadstoffemissionen gemacht. Werden solche Vorhersagen für mehrere Zeitpunkte durchgeführt, können die in einem bestimmten Zeitraum zu erwartenden Emissionen ermittelt werden und in eine Wirtschaflichkeitsrechnung des Anlagenbetriebs einfliessen.

KURZE BESCHREIBUNG DER FIGUREN

Nachfolgend wird die Erfindung anhand von Ausführungsbeispielen im Zusammenhang mit den Zeichnungen näher erläutert. Es zeigen

    Fig. 1 die Komponenten einer Gasturbine mit ausgewählten Betriebsparametern, und
    Fig. 2 ein Flussdiagramm einer rekursiven Koeffizientenoptimierung nach der Erfindung.

Die in den Zeichnungen verwendeten Bezugszeichen sind in der Bezugszeichenliste zusammengefasst. Grundsätzlich sind gleiche Teile mit denselben Bezugszeichen versehen.

WEGE ZUR AUSFÜHRUNG DER ERFINDUNG

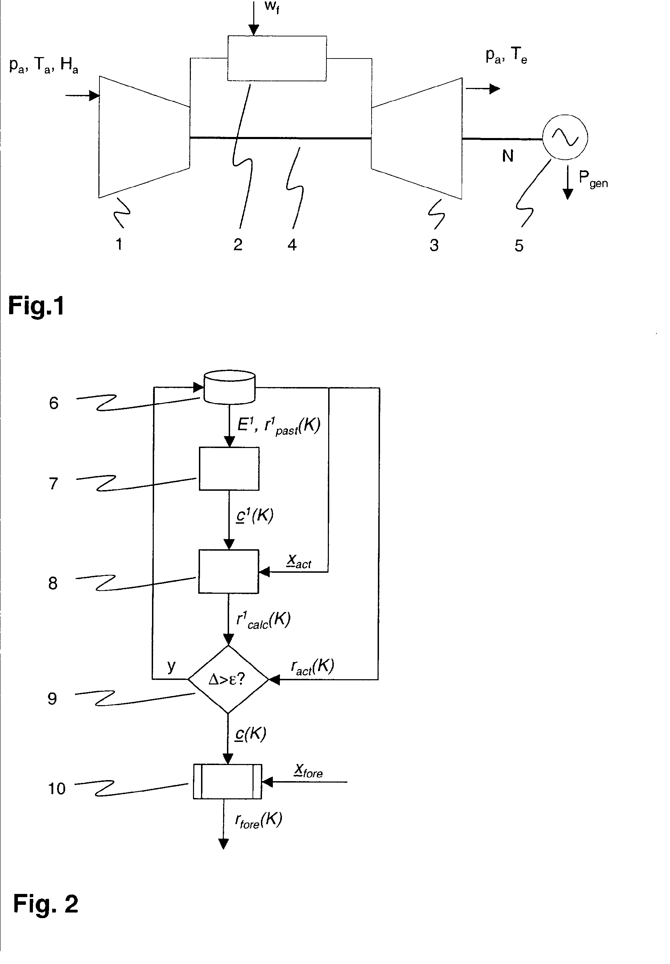

In Fig.1 sind schematisch die Hauptkomponenten einer Gasturbinenanlage dargestellt, nämlich ein Verdichter 1, eine Brennkammer 2, eine Turbine 3, eine Welle 4 und ein Generator 5. Die nachfolgend exemplarisch aufgezählten Parameter werden im Betrieb der Anlage laufend gemessen und in einer anlagenspezifischen Datenbank gespeichert: Umgebungsbedingungen Temperatur $T_a$, Druck $_{pa}$ und Luftfeuchtigkeit $H_a$; zugeführte Brennstoffmenge pro Zeiteinheit $w_f$; Abgastemperatur $T_e$; Drehmoment der Welle $N$ sowie elektrische Leistung des Generators $P_{gen}$. Zudem werden auch die Konzentrationen $r(NOx)$, $r(CO)$ der Schadstoffe Stickoxid (NOx) und Kohlenmonoxid (CO) sowie weiterer Schadstoffe im Abgas fortlaufend gemessen und aufgezeichnet. Wie weiter unten im Detail beschrieben ist, werden erfindungsgemäss aus den aufgezeichneten Messwerten Beziehungen oder Relationen zwischen den Betriebsparametern und den Schadstoffwerten hergeleitet oder ermittelt.

In Fig.2 ist das prinzipielle Vorgehen beim Aktualisieren der erfindungsgemäss ermittelten Beziehungen dargestellt. Dabei wird aus der Datenbank 6 ein erster Datensatz $E^1$, $r^1_{past}(K)$ selektioniert, umfassend beispielsweise alle Messwerte der relevanten Parameter und Schadstoffe aus den vergangenen drei Monaten. Mit diesem Datensatz wird in einem Relationsherleiter 7 für jeden der interessierenden Schadstoffe K eine erste analytische Beziehungen zwischen den Parametern und dem Schadstoffen, beispielsweise in Form eines erster Koeffizientenvektors $\underline{c}^1(K)$, ermittelt. Mit Letzterem und einem Vektor $\underline{x}_{act}$ der aktuellsten Parameterwerte wird in einem Emissionsreproduktor 8 ein erster Schadstoffemissionswert in Form einer Konzentration $r^1_{calc}(K)$ des entsprechenden Schadstoffes berechnet. In einem Vergleicher 9 wird festgestellt, ob der berechnete Schadstoffemissionswert den aktuellsten gemessenen Schadstoffemissionswert $r_{act}(K)$ ausreichend gut reproduziert, indem die Differenz $\Delta$ zwischen der berechneten Schadstoffkonzentration $r^1_{calc}(K)$ und der aktuellsten gemessenen Schadstoffkonzentration $r_{act}(K)$ berechnet und mit einem vorgegebenen Toleranzwert $\varepsilon$ von beispielsweise 5% verglichen wird. Wird dabei der Toleranzwert nicht überschritten, so wird der erste Koeffizientenvektor $\underline{c}^1(K)$ als momentan gültiger Koeffizientenvektor $\underline{c}(K)$ an einen Emissionsprediktor 10 weitergereicht, wo auf Basis von zukünftigen Parameterwerten $\underline{x}_{fore}$ vorhersagen über zukünftige Schadstoffemissionswerte $r_{fore}(K)$ gemacht werden können. Eine Aktualisierung der momentan gültigen Koeffizienten dauert nur Sekundenbruchteile und kann nach Belieben vorgenommen werden, beispielsweise sobald neue Messwerte zur Verfügung stehen.

Ist andererseits die besagte Differenz $\Delta$ zu gross, wird aus der Datenbank 6 ein zweiter Satz Messwerte $E^2$, $r^2_{past}(K)$ selektioniert und dem Relationsherleiter 7 zugeführt, wo ein zweiter Koeffizientenvektor $\underline{c}^2(K)$ bestimmt wird. Dieser zweite Datensatz umfasst beispielsweise alle Messwerte der vergangenen anderthalb Monate und schliesst dadurch möglicherweise diejenigen extremen Betriebsbedingungen von der Relationsherleitung aus, welche eine akzeptable Reproduktion der gemessenen Schadstoffkonzentration $r_{act}(K)$ im ersten Durchlauf verhinderten. Falls der im Emissionsreproduktor 8 ausgewertete zweite Koeffizientenvektor $\underline{c}^2(K)$ wiederum eine ungenügende Reproduktion der gemessenen Schadstoffkonzentration $r_{act}(K)$ liefert, kann das Prozedere mit einem dritten Datensatz $E^3$, $r^3_{past}(K)$ erneut wiederholt werden. Die auszuwertenden Messwerte können dabei aus einem weiter verkürzten Zeitraum stammen. Allgemein ist jedoch zu beachten, dass noch alle vernünftigerweise in einem potentiellen Vorhersageintervall zu erwartenden Betriebsbedingungen durch den ausgewerteten Datensatz erfasst sind, d.h. in besagtem Zeitraum tatsächlich vorgekommen sind.

Das erfindungsgemässe Verfahren zur Herleitung einer analytischen Beziehung zwischen Betriebsparametern und Schadstoffemissionen einer Anlage zur Verbrennung fossiler Brennstoffe basiert auf einer Verwertung von vorhandenen Betriebserfahrungen der betroffenen Anlage. Letztere sind als zu verschiedenen Zeitpunkten gemessene historische Daten oder Messwerte in einer Datenbank der Anlage abgelegt, wobei derartige Datensätze mehrere tausend Messwerte umfassen können. In einem bevorzugten Ansatz werden alle für die Verbrennung relevanten Betriebsparameter für jeden interessierenden Schadstoff in einer analytischen Gleichung für die entsprechende Schadstoffkonzentration $r(K)$ wie folgt zusammengefasst:

$$r\left(K\right) = c_K^0 + \sum_{i=1}^{n}\left(c_{K,i}^1 * x_i + c_{K,i}^2 * (x_i)^2 + c_{K,i}^3 * (x_i)^3\right) = \underline{c}(K) \cdot \underline{x} \tag{1}$$

mit

K = Schadstoffkomponente, deren Anteil bestimmt werden soll

$r(K)$ = Anteil der Schadstoffkomponente K im Abgasstrom

$x_i$ = Parameter der Anlage (Maschine), Betrieb oder Umwelt

$n$ = Anzahl Parameter

$c_K^0$ = parameterunabhängige Konstante

$c_{K,i}^1$ $c_{K,i}^2$ $c_{K,i}^3$ = individuelle Koeffizienten des Parameters $x_i$

Gleichung (1) umfasst Polynome dritten Grades in den einzelnen Parametern $x_i$, was sich in umfangreichen Tests als vorteilhafter Kompromiss zwischen Jeproduktionsvermögen und Rechenaufwand erwiesen hat. Dementsprechend müssen zunächst die individuellen Koeffizienten $c_{K,i}^1$ $c_{K,i}^2$ $c_{K,i}^3$ für die erste, zweite und dritte Potenz aller n Parameter $x_i$ bestimmt werden.

Je nach Relevanz eines Parameters ist es auch denkbar, diesen nur in der ersten und/oder zweiten Potenz in die obige Gleichung aufzunehmen. Zudem können geeignet normierte Parameter relativ zueinander auch unterschiedlich gewichtet werden.

Die Bestimmung der Koeffizienten geschieht bevorzugt wie folgt. Alle Messpunkte $x_{n,m}$, d.h. die zu den verschiedenen Messzeitpunkten gemessenen Parameterwerte werden in einer Datenmatrix E zusammengefasst:

$$E = \begin{Bmatrix} 1 & x_{1,1} & x_{1,1}^2 & x_{1,1}^3 & . & . & . & x_{n,1} & x_{n,1}^2 & x_{n,1}^3 \\ 1 & x_{1,2} & x_{1,2}^2 & x_{1,2}^3 & . & . & . & x_{n,2} & x_{n,2}^2 & x_{n,2}^3 \\ . & . & . & . & . & . & . & . & . \\ . & . & . & . & . & . & . & . & . \\ 1 & x_{1,m} & x_{1,m}^2 & x_{1,m}^3 & . & . & . & x_{n,m} & x_{n,m}^2 & x_{n,m}^3 \end{Bmatrix} \tag{2}$$

wobei

n = Anzahl der Betriebsparameter

m = Anzahl der Messpunkte rsp. Messzeitpunkte

Diese Datenmatrix E multipliziert mit dem gesuchten Vektor $\underline{c}(K)$ der individuellen Koeffizienten für den Schadstoff K muss die an den jeweiligen Messpunkten, beziehungsweise zu den jeweiligen Messzeitpunkten, gemessenen Emissionswerte, zusammengefasst im Vektor $\underline{r}_{past}(K)$ der Emissionen des Schadstoffes K, ergeben. Das Gleichungssystem lautet somit:

$$\underline{r}_{past}(K) = E * \underline{c}(K) \tag{3}$$

Obwohl die Emissionskennzahlen und die Maschinen- bzw. Umweltparameter physikalisch nur in einem nichtlinearen Zusammenhang stehen, wird durch das hier gezeigte Verfahren das ursprüngliche Problem mittels Einführung der individuellen Koeffizienten als ein lineares Problem formuliert. Die Lösung des obigen Gleichungssystems geschieht beispielsweise durch Anwendung einer multiplen Regression, auch bekannt als Moore-Penrose Matrix Pseudoinversion, wobei die rechteckige Matrix E in eine quadratische Matrix überführt wird. Das Gleichungssystem kann dann nach der Methode der kleinsten Fehlerquadrate gelöst werden.

$$\underline{c}(K) = \left(E^T * E\right)^{-1} * E^T * \underline{r}_{past}(K) \tag{4}$$

Alternativ kann auch ein Kalman Filter als rekursive Lösung des vorgenannten mathematischen Problems zur Anwendung kommen. Sobald der Koeffizientenvektor $\underline{c}(K)$ für den Schadstoff K bestimmt ist, kann mit den entsprechenden aktuellen Betriebsparametern und ihren Potenzen, die nun im Vektor der aktuellen Maschinen- oder Umweltparameter $\underline{x}_{act}$ zusammengefasst sind, gemäss Gleichung (1) die entsprechende aktuelle Emissionskennzahl $r_{calc}(K)$ der Abgaskomponente K bestimmt werden.

Sind die geplanten Betriebsdaten bekannt, und benutzt man für die Umweltdaten die Angaben einer lokalen Wettervorhersage, so ist es innerhalb der Grenzen der Vorhersagbarkeit des Wetters möglich, für einen Zeithorizont von 0.5 bis 5 Tagen auch eine Vorhersage über die zukünftige Konzentration $r_{fore}(K)$ des Schadstoffes K der Feuerungsanlage zu machen. Mit dem Vektor $\underline{x}_{fore}$ der zu einem zukünftigen Zeitpunkt geschätzten Betriebsparameter lautet diese Gleichung entsprechend:

$$r_{fore}(K) = \underline{c}(K) \cdot \underline{x}_{fore} \tag{5}$$

Die durchgeführten Tests mit dem vorgehend beschriebenen Verfahren ergaben eine ansprechende Reproduzierbarkeit der Schadstoffwerte. Für Stickoxide (NOx) lag der mittlere Fehler, d.h. die mittlere Differenz $\Delta$ zwischen berechneten und gemessenen Schadstoffkonzentrationen, bei $2 * 10^{-10}$ ppm bei einer Standardabweichung von 5%. Da die Messgenauigkeit der Gasanalysegeräte für Stickoxide nur 10% beträgt ist dieser Wert durchaus akzeptabel. Die Testergebnisse für Kohlenmonoxid (CO) ergaben mit $3 * 10^{-6}$ ppm bei einer Standardabweichung von weniger als 2% einen etwas höheren mittleren Fehler.

Allgemein ist das erfindungsgemässe Verfahren in der Lage, zumindest diejenigen Betriebszustände zu reproduzieren, welche im verwerteten Datensatz enthalten waren, beziehungsweise in dem entsprechenden Zeitintervall tatsächlich vorgekommen sind. Es sollte also darauf geachtet werden, dass möglichst viele unterschiedliche Anlagenbetriebsverhalten (Anfahrvorgänge warm und kalt, Leistungsspitzen, schnelle Lastwechsel, Abfahrvorgänge) in die Herleitung der Beziehung einfliessen.

Für eine weitere Optimierung des Verfahrens steht die richtige Auswahl der relevanten Betriebs- beziehungsweise Maschinen- und Umweltparameter im Vordergrund. Von den vielen hundert Messwerten, die vom Leitsystem einer Feuerungsanlage zur Verfügung gestellt werden haben einige, wie zum Beispiel die umgesetzte thermische Leistung, einen sehr starken Einfluss auf die Schadstoffemissionen. Andere Grössen, wie beispielsweise Lagertemperaturen, sind eher vernachlässigbar. Vorteilhafterweise wird diese Auswahl beim anlagenspezifischen Einrichten des Systems von einer Person mit entsprechenden Fachkenntnissen getroffen. Eine automatisierte Auswahl hingegen lässt sich nur durch neuronale Netzwerke oder genetische Algorithmen bewerkstelligen.

BEZUGSZEICHENLISTE

1   Verdichter (compressor)

2    Brennkammer (combustor)
3    Turbine
4    Welle (shaft)
5    Generator
6    Datenbank mit historischen Messwerten
7    Relationsherleiter
8    Emissionsreproduktor
9    Vergleicher
10   Emissionsprediktor

**Patentansprüche**

1. Verfahren zur Herleitung einer analytischen Beziehung $(\underline{c}(K))$ zwischen Betriebsparametern $(\underline{x})$ einer Anlage zur Verbrennung fossiler Brennstoffe, insbesondere einer Gasturbine, und einem Emissionswert $(r(K))$ eines beim Betrieb der Anlage ausgestossenen Schadstoffes $(K)$,
**dadurch gekennzeichnet, dass** die Beziehung hergeleitet wird aus historischen Messdaten $(E, r_{past}(K))$ der Betriebsparameter und der zugehörigen Emissionen des Schadstoffes.

2. Verfahren nach Anspruch 1, **dadurch gekennzeichnet, dass** aus den historischen Messdaten $(E, r_{past}(K))$ ein Koeffizientenvektor $(\underline{c}(K))$ einer linearen Beziehung hergeleitet wird.

3. Verfahren nach Anspruch 2, **dadurch gekennzeichnet, dass** der Koeffizientenvektor Koeffizienten $(c^1{}_i, c^2{}_i, c^3{}_i)$ von Polynomen höchstens dritten Grades in jeweils einem Betriebsparameter $(\underline{x}_i)$ umfasst.

4. Verfahren nach Anspruch 1, **dadurch gekennzeichnet, dass** die Betriebsparameter $(\underline{x})$ zumindest einen Gradienten einer Abgastemperatur $(T_e)$, einer Brennstoffmenge $(w_f)$, oder einer erzeugten Leistung der Anlage $(P_{gen})$ umfasst.

5. Verfahren nach Anspruch 1, **dadurch gekennzeichnet, dass** aus einem ersten Satz $(E^1, r^1{}_{past}(K))$ von historischen Messdaten aus einem ersten Zeitraum eine erste Beziehung $(\underline{c}^1(K))$ hergeleitet wird, und anschliessend mit aktuellen Parameterwerten $(\underline{x}_{act})$ ein Emissionswert $(r_{calc}(K))$ berechnet und mit einem entsprechenden gemessenen aktuellen Emissionswert $(r_{act}(K))$ verglichen wird.

6. Verfahren nach Anspruch 5, **dadurch gekennzeichnet, dass** bei Vorliegen einer eine vorbestimmte Toleranz $(\varepsilon)$ überschreitenden Differenz $(\Delta)$ zwischen den gemessenen und berechneten Emissionswerten ein zweiter Satz $(E^2, r^2{}_{past}(K))$ von historischen Messdaten verwertet wird.

7. Verfahren nach Anspruch 6, **dadurch gekennzeichnet, dass** der zweite Satz $(E^2, r^2{}_{past}(K))$ von historischen Messdaten aus einem gegenüber dem ersten Zeitraum verkürzten oder aktuelleren zweiten Zeitraum stammt.

8. Verwendung einer analytischen Beziehung $(\underline{c}(K))$ zwischen Betriebsparametern $(\underline{x})$ einer Anlage zur Verbrennung fossiler Brennstoffe, insbesondere einer Gasturbine, und einem Emissionswert $(r(K))$ eines beim Betrieb der Anlage ausgestossenen Schadstoffes $(K)$, welche Beziehung aus historischen Messdaten $(E, r_{past}(K))$ der Betriebsparameter und der zugehörigen Emissionen des Schadstoffes hergeleitet ist, zur Vorhersage von Emissionswerten $(r_{fore}(K))$ des Schadstoffes auf Grund von zukünftigen Betriebsparameterwerten $(\underline{x}_{fore})$.

9. Verwendung nach Anspruch 8, **dadurch gekennzeichnet, dass** für mehrere Zeitpunkte eines vorbestimmten Zeitraumes die Betriebsparameterwerte $(\underline{x}_{fore})$ vorgegeben oder abgeschätzt werden und daraus mehrere Emissionswerte $(r_{fore}(K))$ vorhergesagt werden.

10. Computerprogramm zur Herleitung einer analytischen Beziehung $(\underline{c}(K))$ zwischen Betriebsparametern $(\underline{x})$ einer Anlage zur Verbrennung fossiler Brennstoffe, insbesondere einer Gasturbine, und einem Emissionswert $(r(K))$ eines beim Betrieb der Anlage ausgestossenen Schadstoffes $(K)$, welches bei seiner Ausführung historische Messdaten $(E, r_{past}(K))$ der Betriebsparameter und der zugehörigen Emissionen des Schadstoffes aus einer Datenbank (6) der Anlage liest und daraus die Beziehung herleitet.

**Fig.1**

**Fig. 2**

**Europäisches Patentamt**

# EUROPÄISCHER RECHERCHENBERICHT

Nummer der Anmeldung

EP 05 40 5194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br>Y | US 2002/065581 A1 (FASCA TED S)<br>30. Mai 2002 (2002-05-30)<br>* Absätze [0046], [0048], [0050] -<br>[0060], [0062], [0065], [0070] *<br>* Ansprüche 1-7 *<br>* Abbildungen 1-6 *<br>----- | 1,4,5,<br>8-10<br>2,3,6,7 | F02C9/00 |
| X | WO 2004/057164 A (NUOVO PIGNONE HOLDING S.P.A; MOCHI, GIANNI; CASSI, LAURA; BONCIANI, LU) 8. Juli 2004 (2004-07-08)<br>* Seite 2, Zeile 17 - Zeile 23 *<br>* Seite 4, Zeile 8 - Zeile 14 *<br>* Seite 5, Zeile 17 - Seite 6, Zeile 6 *<br>* Seite 6, Zeile 16 - Zeile 20 *<br>* Seite 7, Zeile 14 - Seite 8, Zeile 2 *<br>----- | 1,4,5,8,<br>10 | |
| X | US 5 539 638 A (KEELER ET AL)<br>23. Juli 1996 (1996-07-23)<br>* das ganze Dokument *<br>----- | 1-4,8,10 | |
| X | US 5 970 426 A (MANDEL ET AL)<br>19. Oktober 1999 (1999-10-19)<br>* Spalte 3, Zeile 39 - Zeile 60 *<br>* Spalte 4, Zeile 7 - Zeile 18 *<br>----- | 1,8,10 | RECHERCHIERTE SACHGEBIETE (Int.Cl.7)<br><br>F02C |
| Y | EP 0 315 307 A (ROLLS-ROYCE PLC)<br>10. Mai 1989 (1989-05-10)<br>* das ganze Dokument *<br>----- | 2,3,6,7 | |
| D,A | DE 101 42 514 A1 (KABUSHIKI KAISHA TOSHIBA, TOKIO/TOKYO; TOSHIBA ENGINEERING CORP., KAWA) 13. Juni 2002 (2002-06-13)<br>* Absätze [0019], [0049], [0056] -<br>[0059] *<br>----- | 1-10 | |
| A | DE 103 16 062 A1 (CUMMINS, INC)<br>23. Oktober 2003 (2003-10-23)<br>* Absätze [0014], [0017] - [0022],<br>[0027], [0029], [0038] - [0041] *<br>----- | 1-10 | |

Der vorliegende Recherchenbericht wurde für alle Patentansprüche erstellt

| Recherchenort | Abschlußdatum der Recherche | Prüfer |
|---|---|---|
| Den Haag | 15. Juli 2005 | Steinhauser, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 05 40 5194

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2005

| Im Recherchenbericht angeführtes Patentdokument | Datum der Veröffentlichung | Mitglied(er) der Patentfamilie | | Datum der Veröffentlichung |
|---|---|---|---|---|
| US 2002065581 A1 | 30-05-2002 | KEINE | | |
| WO 2004057164 A | 08-07-2004 | AU | 2003293941 A1 | 14-07-2004 |
| | | WO | 2004057164 A1 | 08-07-2004 |
| US 5539638 A | 23-07-1996 | US | 5386373 A | 31-01-1995 |
| | | AU | 688353 B2 | 12-03-1998 |
| | | AU | 7375894 A | 28-02-1995 |
| | | AU | 677694 B2 | 01-05-1997 |
| | | AU | 7477694 A | 28-02-1995 |
| | | CA | 2167588 A1 | 16-02-1995 |
| | | CA | 2167927 A1 | 16-02-1995 |
| | | DE | 69418199 D1 | 02-06-1999 |
| | | DE | 69418199 T2 | 30-12-1999 |
| | | DE | 69423895 D1 | 11-05-2000 |
| | | DE | 69423895 T2 | 07-12-2000 |
| | | EP | 0712463 A1 | 22-05-1996 |
| | | EP | 0712509 A1 | 22-05-1996 |
| | | JP | 9501782 T | 18-02-1997 |
| | | JP | 9504346 T | 28-04-1997 |
| | | WO | 9504957 A1 | 16-02-1995 |
| | | WO | 9504878 A1 | 16-02-1995 |
| | | US | 5682317 A | 28-10-1997 |
| | | US | 5548528 A | 20-08-1996 |
| US 5970426 A | 19-10-1999 | US | 6844010 B1 | 18-01-2005 |
| EP 0315307 A | 10-05-1989 | GB | 2211965 A | 12-07-1989 |
| | | DE | 3850347 D1 | 28-07-1994 |
| | | DE | 3850347 T2 | 13-10-1994 |
| | | EP | 0315307 A2 | 10-05-1989 |
| | | JP | 1161115 A | 23-06-1989 |
| | | US | 5105372 A | 14-04-1992 |
| DE 10142514 A1 | 13-06-2002 | JP | 2002070584 A | 08-03-2002 |
| | | FR | 2813342 A1 | 01-03-2002 |
| | | US | 2002029557 A1 | 14-03-2002 |
| DE 10316062 A1 | 23-10-2003 | US | 2003191575 A1 | 09-10-2003 |
| | | GB | 2387340 A ,B | 15-10-2003 |

EPO FORM P0461

Für nähere Einzelheiten zu diesem Anhang : siehe Amtsblatt des Europäischen Patentamts, Nr.12/82